# EUROPÄISCHE PATENTSCHRIFT

(11) **EP 1 036 430 B1**
(45) Veröffentlichungstag und Bekanntmachung des Hinweises auf die Patenterteilung: **24.10.2001**
(21) Anmeldenummer: 98966252.3
(22) Anmeldetag: 03.12.1998
(51) Int. Cl.: H02B 1/30, H01R 4/64

(54) **BODENBLECHBEFESTIGUNG FÜR EINEN SCHALTSCHRANK**
BOTTOM PLATE FIXING DEVICE FOR A SWITCHGEAR CABINET
FIXATION DE SEMELLE POUR ARMOIRE ELECTRIQUE

(30) Priorität: 05.12.1997 DE 19754130
(43) Veröffentlichungstag der Anmeldung: 20.09.2000
(73) Patentinhaber: Rittal-Werk Rudolf Loh GmbH & Co. KG, 35745 Herborn (DE)
(72) Erfinder: REUTER, Wolfgang, D-57299 Burbach (DE)
(74) Vertreter: Fleck, Hermann-Josef, Dr.-Ing.
(86) Internationale Anmeldenummer: EP9807845
(87) Internationale Veröffentlichungsnummer: WO9930395

(56) Entgegenhaltungen:
- US-A- 4 828 504
- US-A- 5 094 622

## Beschreibung

Die Erfindung betrifft eine Bodenblechbefestigung für einen Schaltschrank, wobei auf einem Anlageflansch eines Bodenrahmens des Schaltschrankes wenigstens ein Bodenblech mit seinem Rand aufgelegt und mittels wenigstens einer Spannklammer mit diesem verspannt ist, wobei die Spannklammern zwei zueinander parallele Schenkel aufweist, die an einem Verbindungsabschnitt gehalten sind, wobei der erste Schenkel den Anlageflansch des Bodenrahmens hintergreift und wobei der andere Schenkel in einem Gewinde eine Schraube hält, die gegen den Rand des Bodenblechs verspannbar ist.

Eine solche Bodenblechbefestigung ist aus der DE 44 46 223 C1 bekannt. Der Bodenrahmen des Schaltschrankes ist dabei aus vier Profilabschnitten zusammengesetzt. Die Profilabschnitte sind im wesentlichen U-förmig ausgebildet, wobei an einem horizontalen Auflageabschnitt zwei senkrecht abstehende Profilseiten angeschlossen sind. Die Profilseiten sind an ihren Rändern abgekantet. Damit entsteht an dem innenliegenden Profilabschnitt ein horizontaler Anlageflansch, auf den Bodenbleche plan aufgelegt werden können. Die Ränder der Bodenbleche können mit dem Aniageflansch mittels Spannklammern verbunden werden. Die Spannklammern sind als U-förmige Bauteile mit zwei parallelen Schenkel ausgebildet.

Zwischen den beiden Schenkeln befindet sich der Rand und der Aniageflansch. Einer der beiden Schenkel trägt eine Schraube, mittels der das Bodenblech mit dem Anlageflansch an dem zweiten Schenkel verspannt werden kann.

Es ist Aufgabe der Erfindung, eine Befestigung der eingangs erwähnten Art zu schaffen, mittels der das Bodenblech und der Bodenrahmen zuverlässig auf das gleiche elektrische Niveau gelegt werden können.

Diese Aufgabe wird dadurch gelöst, daß sich der erste Schenkel mittels Schneiden und/oder Spitzen von Kontaktierungselementen von an dem Anlageflansch abstützt, und daß die Schraube im elektrisch leitenden Kontakt mit dem Rand des Bodenblechs steht.

Die Schneiden und/oder Spitzen graben sich beim Verspannen der Spannklammer in den Anlageflansch ein, Insbesondere kann eine auf dem Anlageflansch aufgebrachte Lackschicht durchstoßen werden, so daß ein sicherer elektrischer Kontakt zwischen der Spannklammer und dem Anlageflansch entsteht. Die elektrisch leitende Verbindung zu dem Bodenblech wird über die Schraube hergestellt. Diese gelangt beim Verschrauben in innigen Kontakt mit dem Bodenblech. Infolge des Anziehens der Schraube reibt die Schraube über die Oberseite des Bodenblechs und vermag damit einen sicheren elektrischen Kontakt herzustellen.

Nach einer bevorzugten Ausgestaltungsvariante der Erfindung ist es vorgesehen, daß aus dem ersten Schenkel wenigstens zwei als Zungen ausgebildete Kontaktierungselemente freigestanzt und in Richtung auf den Anlageflansch hin abgebogen sind, und daß die Zungen endseitig quer zu ihrer Längsachse abgeschnitten sind, so daß sich Schneiden bilden. Mit dieser einfachen Maßnahme ist eine kostengünstige Fertigung der Spannklammern möglich.

Wenn vorgesehen ist, daß der Verbindungsabschnitt Versteifungsrippen aufweist, die senkrecht zu den Schenkeln stehen, dann ist eine Aussteifung der Spannklammer erreicht. Insbesondere wird dadurch verhindert, daß sich der Verbindungsabschnitt beim Anziehen der Schraube verbiegt.

Zusätzlich kann es dabei vorgesehen sein, daß sich die Versteifungsrippen über die zwischen dem Verbindungsabschnitt gebildeten Kantenbereiche hinaus erstrecken. Diese einfache Maßnahme verhindert, daß die Schenkel beim Verspannen der Spannklammer aufgebogen werden. Mit einer solchen biegesteifen Spannklammer lassen sich hohe Spannkräfte auf das Bodenblech und den Anlageflansch übertragen.

Eine mögliche Erfindungsvariante kennzeichnet sich dadurch aus, daß die Spannklammer U-förmig aus einem Stanz-Biegeteil gefertigt ist, und daß der dem Bodenblech zugewandte Schenkel mit einer wulstartigen Verdickung versehen ist, in den die Gewindeaufnahme für die Schraube eingearbeitet ist. Damit kann die Spannklammer aus einem relativ dünnen Blechmaterial gefertigt werden. Eine ausreichende Gewindelänge wird dabei mittels der Verdickung sichergestellt.

Zur verbesserten elektrischen Kontaktierung zwischen dem Bodenblech und der Schraube kann die Schraube stirnseitig mit Vorsprüngen versehen sein. Diese graben sich beim Anziehen der Schraube in die Oberfläche des Bodenbleches ein.

Die Erfindung wird im folgenden anhand eines in den Zeichnungen dargestellten Ausführungsbeispiels näher erläutert. Es zeigen:
- Fig. 1: eine Spannklammer mit einer Schraube in Seitenansicht und dem Schnitt,
- Fig. 2: die Spannklammer gemäß Fig. 1 in perspektivischer Darstellung und
- Fig. 3: die in den Figuren 1 und 2 gezeigte Spannklammer in montierter Stellung.

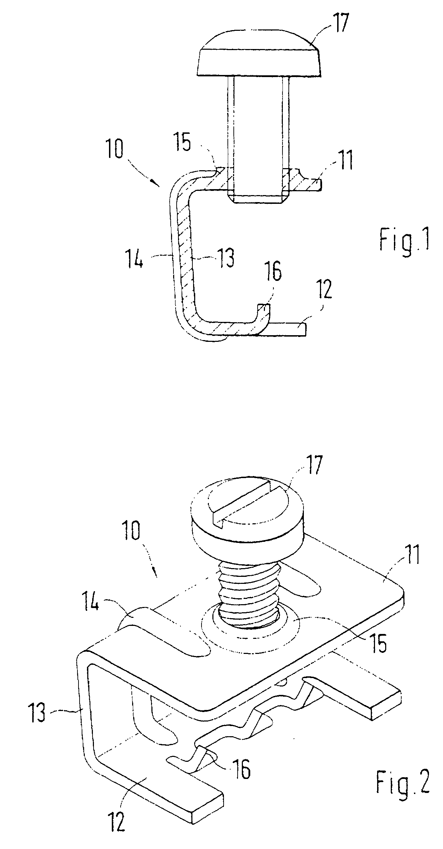

In der Fig. 1 ist eine Spannklammer 10 dargestellt, die im wesentlichen U-förmig aus einem Verbindungsabschnitt 13 und zwei daran angeschlossenen, zueinander parallelen Schenkel 11, 12 gebildet ist. Dabei ist der obere Schenkel 11 mit einer wulstartigen Verdickung 15 versehen. Diese Verdickung 15 ist von einer Gewindeaufnahme durchdrungen. Die Gewindeachse steht dabei senkrecht zu dem Schenkel 11. In die Gewindeaufnahme kann eine Schraube 17 eingeschraubt werden. Der untere Schenkel 12 weist drei Kontaktierungselemente 16 auf. Die Anordnung der Kontaktierungselemente 16 kann im einzelnen der Fig. 2 entnommen werden. Aus dieser Darstellung ist ersichtlich, daß die Kontaktierungselemente zungenartig aus dem Schenkel 12 freigestanzt sind. Die Enden der Kontaktierungselemente sind dabei schräg zu ihrer Längsrichtung abgeschnitten, so daß sich dreieckförmige Spitzen ergeben. Die Kontaktierungselemente 16 sind im Bereich ihrer Spitzen in Richtung zu dem oberen Schenkel 11 hin abgebogen. Dabei ragen scharfkantige Schneiden der Kontaktierungselemente 16 in den von der Spannklammer 10 umgebenen Aufnahmeraum. Die Spannklammer 10 weist drei Kontaktierungselemente 16 auf. Das mittlere Kontaktierungselement steht dabei in Flucht zu der Mittellängsachse der Schraube 17.

Zur Aussteifung der Spannklammer 10 sind Aussteifungsrippen 14 verwendet. Die Aussteifungsrippen 14 verlaufen senkrecht zu den Schenkeln 11, 12 über die gesamte Höhe des Verbindungsabschnitts 13. Im Anschluß an den Verbindungsabschnitt 13 sind die Rippen über den Kantenbereich, der sich zwischen dem Verbindungsabschnitt und den Schenkeln 11, 12 ergibt, geführt und erstrecken sich teilweise über die Schenkel 11, 12. Die Aussteifungsrippen 14 sind als Ausprägungen ausgebildet, die aus dem Material der Spannklammer 10 herausgedrückt sind.

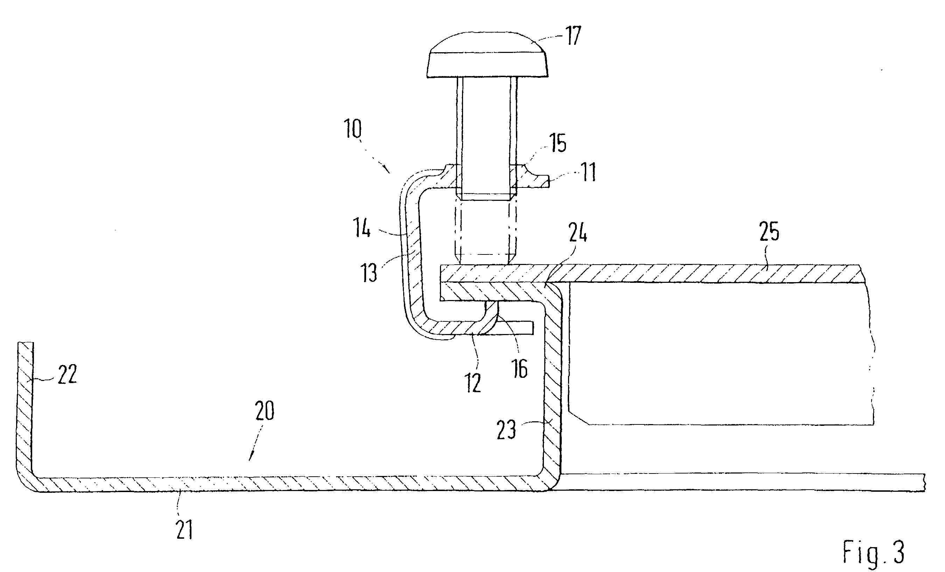

In der Fig. 3 ist ein Anwendungsbeispiel der erfindungsgemäßen Spannklammer 10 dargestellt. In dieser Zeichnung ist ein Bodenrahmen 20 dargestellt, der einen horizontalen Auflageabschnitt 21 aufweist. Von dem Auflageabschnitt 21 sind zwei Profilseiten 22, 23 rechtwinklig abgekantet. Von der inneren Profilseite 23 ist ein Anlageflansch 24 abgebogen. Auf diesem kann ein Bodenblech 25 mit seinem Rand aufgelegt werden. Das Bodenblech 25 kann mit dem Anlageflansch 24 mittels mehrerer Spannklammern 10 verspannt werden. Dabei wird die U-förmige Spannklammer so montiert, daß der Rand des Bodenbleches 25 und der Anlageflansch 24 zwischen den beiden Schenkeln 11, 12 zum Liegen kommt. Beim Anziehen der Schraube 17 werden das Bodenblech und der Anlageflansch gegen die Kontaktierungselemente 16 gepreßt (siehe gestrichelte Darstellung der Schraube 17). Infolge der Einbringung einer Spannkraft in die Schraube 17 graben sich die Kontaktierungselemente 16 mit ihren Schneiden in die Unterseite des Anlageabschnitts 24 ein. Damit wird eine elektrisch leitende Verbindung zwischen der Spannklammer 10 und dem Bodenrahmen 20 hergestellt. Gleichzeitig ist auch die Schraube 17 auf die elektrisch leitende Oberseite des Bodenbleches 25 aufgesetzt, so daß auch hier eine elektrisch leitende Verbindung entsteht. Damit lassen sich das Bodenblech 25 und der Bodenrahmen 20 auf ein gleiches elektrisches Potential legen.

## Patentansprüche

1. Bodenblechbefestigung für einen Schaltschrank, wobei auf einem Anlageflansch (24) eines Bodenrahmens (20) des Schaltschrankes wenigstens ein Bodenblech (25) mit seinem Rand aufgelegt und mittels wenigstens einer Spannklammer (10) mit diesem verspannt ist, wobei die Spannklammer (10) zwei zueinander parallele Schenkel (11, 12) aufweist, die an einem Verbindungs-abschnitt (13) gehalten sind, wobei der erste Schenkel (12) den Anlageflansch (24) des Bodenrahmes (20) hintergreift und wobei der andere Schenkel (11) in einem Gewinde eine Schraube (17) hält, die gegen den Rand des Bodenblechs (25) verspannbar ist,
**dadurch gekennzeichnet,**
**daß** sich der erste Schenkel (12) mittels Schneiden und/oder Spitzen von Kontaktierungselementen (16) an dem Anlagefiansch (24) abstützt, und
**daß** die Schraube (17) im elektrisch leitenden Kontakt mit dem Rand des Bodenblechs (25) steht.

2. Bodenblechbefestigung nach Anspruch 1,
**dadurch gekennzeichnet,**
**daß** aus dem ersten Schenkel (12) wenigstens zwei als Zungen ausgebildete Kontaktierungselemente (16) freigestanzt und in Richtung auf den Anlageflansch (24) hin abgebogen sind,
**daß** die Zungen endseitig quer zu ihrer Längsachse abgeschnitten sind, so daß sich die Schneiden bilden.

3. Bodenblechbefestigung nach einem der Ansprüche 1 oder 2,
**dadurch gekennzeichnet,**
**daß** der Verbindungsabschnitt (13) Versteifungsrippen (14) aufweist, die senkrecht zu den Schenkeln (11, 12) stehen.

4. Bodenblechbefestigung nach Anspruch 3,
**dadurch gekennzeichnet,**
**daß** sich die Versteifungsrippen (14) über die zwischen dem Verbindungsabschnitt (13) und den Schenkeln (11, 12) gebildeten Kantenbereiche hinaus erstrecken.

5. Bodenblechbefestigung nach einem der Ansprüche 1 bis 4,
**dadurch gekennzeichnet,**
**daß** die Spannklammer (10) U-förmig aus einem Stanz-Biegeteil gefertigt ist, und
**daß** der dem Bodenblech (24) zugewandte Schenkel (11) mit einer wulstartigen Verdickung (15) versehen ist, in den die Gewindeaufnahme für die Schraube (17) eingearbeitet ist.

6. Bodenblechbefestigung nach einem der Ansprüche 1 bis 5,
**dadurch gekennzeichnet,**
**daß** die Schraube (17) an ihrer auf dem Bodenblech (25) aufgesetzten Stirnseite mit Vorsprüngen versehen ist.

## Claims

1. Base-plate fastening for a switch cabinet, at least one base plate (25) being positioned, by way of its border, on an abutment flange (24) of a base frame (20) of the switch cabinet and being braced therewith by means of at least one clamp (10), the clamp (10) having two legs (11, 12) which are parallel to one another and are retained on a connecting section (13), the first leg (12) engaging behind the abutment flange (24) of the base frame (20), and the other leg (11) retaining a screw (17) in a thread, it being possible for said screw to be braced against the border of the base plate (25), **characterized in that** the first leg (12) is supported on the abutment flange (24) by means of cutting edges and/or tips of contact-making elements (16), and **in that** the screw (17) is in electrically conductive contact with the border of the base plate (25).

2. Base-plate fastening according to Claim 1, **characterized in that** at least two tongue-form contact-making elements (16) are punched out of the first leg (12) and are bent in the direction of the abutment flange (24), and **in that** material is cut off from the ends of the tongues, in the direction transverse to their longitudinal axis, to form the cutting edges.

3. Base-plate fastening according to either of Claims 1 and 2, **characterized in that** the connecting section (13) has stiffening ribs (14) which are located perpendicularly to the legs (11, 12).

4. Base-plate fastening according to Claim 3, **characterized in that** the stiffening ribs (14) extend beyond the edge regions formed between the connecting section (13) and the legs (11, 12).

5. Base-plate fastening according to one of Claims 1 to 4, **characterized in that** the clamp (10) is produced in the form of a U from a punched and bent part, and **in that** the leg (11), which is directed towards the base plate (25), is provided with a bead-like thickening (15) in which the threaded mount for the screw (17) is made.

6. Base-plate fastening according to one of Claims 1 to 5, **characterized in that** the screw (17) is provided with protrusions on its end side positioned on the base plate (25).

## Revendications

1. Fixation de semelle pour une armoire électrique, dans laquelle au moins une semelle (25) est posée par son bord sur une bride d'appui (24) d'un cadre de pied (20) de l'armoire électrique et est serrée sur celle-ci au moyen d'au moins une pince de serrage (10), dans laquelle la pince de serrage (10) présente deux ailes (11, 12) parallèles l'une à l'autre, qui sont attachées à une portion de jonction (13), dans laquelle la première aile (12) s'accroche à l'arrière de la bride d'appui (24) du cadre de pied (20) et dans laquelle l'autre aile (11) porte dans un filetage une vis (17), qui peut être serrée sur le bord de la semelle (25), **caractérisée en ce que** la première aile (12) prend appui sur la bride d'appui (24) au moyen d'arêtes vives et/ou de pointes d'éléments de contact (16), et **en ce que** la vis (17) est en contact électrique conducteur avec le bord de la semelle (25).

2. Fixation de semelle suivant la revendication 1, **caractérisée en ce qu'**au moins deux éléments de contact (16) sous forme de languettes sont estampés sans matrice dans la première aile (12) et sont repliés en direction de la bride d'appui (24), et **en ce que** les languettes sont découpées à leurs extrémités transversalement à leur axe longitudinal, de façon à former les arêtes vives.

3. Fixation de semelle suivant l'une des revendications 1 ou 2, **caractérisée en ce que** la portion de jonction (13) présente des nervures de raidissement (14), qui sont perpendiculaires aux ailes (11, 12).

4. Fixation de semelle suivant la revendication 3, **caractérisée en ce que** les nervures de raidissement (14) s'étendent au-delà des zones d'arête formées entre la portion de jonction (13) et les ailes (11, 12).

5. Fixation de semelle suivant l'une quelconque des revendications 1 à 4, **caractérisée en ce que** la pince de serrage (10) est fabriquée en forme de U à partir d'une pièce pliée par estampage et **en ce que** l'aile (11) tournée vers la semelle (25) est pourvue d'une surépaisseur (15) en forme de bourrelet, dans laquelle est usiné le logement fileté pour la vis (17).

6. Fixation de semelle suivant l'une quelconque des revendications 1 à 5, **caractérisée en ce que** la vis (17) est pourvue de protubérances sur sa face d'extrémité appliquée sur la semelle (25).
